Europäisches Patentamt

European Patent Office

Office européen des brevets

(19)

(11) **EP 0 785 170 B1**

(12) **FASCICULE DE BREVET EUROPEEN**

(45) Date de publication et mention
de la délivrance du brevet:
**17.05.2000 Bulletin 2000/20**

(51) Int Cl.$^7$: **C01D 15/04**, C01D 15/00,
C01B 13/02, C01B 21/04,
C01B 39/02, B01J 39/14,
B01J 39/04

(21) Numéro de dépôt: **96402734.6**

(22) Date de dépôt: **13.12.1996**

(54) **Procédé de purification d'une solution de sels de lithium contaminée par des cations métalliques et utilisation de ce procédé dans la fabrication de zéolites échangées au lithium**

Verfahren zur Reinigung einer mit metallischen Kationen kontaminierten Lösung aus Lithiumsalzen und Verwendung dieses Verfahrens zur Herstellung von Lithium-ausgetauschten Zeolithen

Process for the purification of a solution of lithium salts contaminated with metallic cations and use of that process in the production of lithium-exchanged zeolites

(84) Etats contractants désignés:
**CH DE FR IT LI**

(30) Priorité: **18.01.1996 FR 9600552**

(43) Date de publication de la demande:
**23.07.1997 Bulletin 1997/30**

(73) Titulaire: **L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeur: **Moreau, Serge
78148 Velizy-Villacoublay (FR)**

(74) Mandataire: **Le Moenner, Gabriel et al
L'AIR LIQUIDE,
Service Brevets et Marques
75321 Paris Cédex 07 (FR)**

(56) Documents cités:
**EP-A- 0 659 481        DD-A- 294 287**

• **PATENT ABSTRACTS OF JAPAN vol. 007, no. 289 (C-202), 23 Décembre 1983 & JP 58 167424 A (MITSUO ABE), 3 Octobre 1983,**

**Description**

L'invention concerne un procédé pour la purification de solutions de sels de lithium contaminées par des cations métalliques dans lequel les impuretés métalliques sont éliminées par échange d'ions par mise en contact desdites solutions avec un matériau approprié. Le procédé de l'invention est particulièrement utile pour le recyclage des solutions résiduelles provenant d'unités de production de zéolites au lithium.

Parmi les adsorbants permettant une bonne séparation de l'azote et de l'oxygène contenus dans l'air, les zéolites au lithium et notamment les faujasites au lithium se sont révélées particulièrement efficaces en raison de leur meilleure sélectivité d'adsorption de l'azote par rapport à l'oxygène.

Le principal inconvénient de ces zéolites reste néanmoins leur prix de revient très élevé.

Dans la technique antérieure, les faujasites au lithium sont préparées par échange d'ions à partir de faujasites synthétiques sous forme sodique, lesquelles sont disponibles dans le commerce.

Plus précisément, les méthodes décrites préconisent le traitement des faujasites sodiques par des solutions de sels de lithium. Toutefois, dans la mesure où les faujasites, tout comme la plupart des zéolites, présentent une meilleure affinité pour l'ion Na$^+$ que pour l'ion Li$^+$, une grande quantité de solutions de sels de lithium doit être déversée sur la faujasite dans le but de préparer une faujasite échangée à au moins 80 % au lithium. En moyenne, la consommation en ions lithium correspond à 4 à 12 fois la quantité d'ions lithium devant être incorporés dans la faujasite. Or, les sels de lithium utilisés, principalement des chlorures, sont onéreux et polluants : ces inconvénients majeurs ont limité jusqu'à présent le développement et l'utilisation des zéolites au lithium.

Ainsi, le document EP-A-659 481 décrit un procédé pour concentrer les ions lithium contenus dans une solution diluée de lithium par une technique d'échange d'ions.

Par ailleurs, le document DD-A-294 287 concerne la purification de solutions contenant du lithium au moyen d'un échangeur d'ions de type résine.

En outre, le document JP-A-58167424 enseigne la séparation sélective du lithium à l'aide d'un échangeur d'ions sélectif inorganique.

De façon à pallier ces inconvénients, la mise au point de procédés de recyclage des solutions résiduelles de sels de lithium provenant des unités de production de zéolites au lithium est souhaitable.

Pour ce faire, l'invention propose un procédé de traitement de solutions de sels de lithium contaminées par des cations métalliques, permettant une élimination complète desdites impuretés métalliques. Ce procédé est parfaitement indiqué pour la purification des solutions résiduelles de sels de lithium issues d'unités de fabrication de zéolites au lithium dans la mesure où lesdites solutions résiduelles contiennent comme principales impuretés les cations métalliques initialement contenus dans le zéolite naturelle ou synthétique de départ.

De façon plus détaillée, l'invention fournit un procédé de purification d'une solution de sels de lithium contaminée par des cations métalliques comprenant les étapes consistant à :

(i) faire passer la solution à purifier dans une zone d'échange garnie d'un matériau approprié pour l'échange de cations Li$^+$ par lesdits cations métalliques, ledit matériau étant une zéolite initialement chargée à plus de 95 % en cations Li$^+$ et présentant une meilleure affinité pour lesdits cations métalliques que pour les cations Li$^+$, de façon à fixer la totalité des cations métalliques contaminants sur ledit matériau par déplacement de cations Li$^+$, ce par quoi la solution de sels de lithium récupérée en sortie de ladite zone d'échange est débarassée desdits cations métalliques contaminants;
(ii) régénérer ledit matériau par substitution des cations métalliques fixés sur ledit matériau par des cations Li$^+$.

Le procédé de l'invention est applicable, que les cations métalliques contaminants soient mono-, di- ou trivalents. Selon l'invention on entend par cation mono-, di- respectivement trivalent, des cations respectivement à l'état d'oxydation +I, +II et + III. Ainsi, les solutions à purifier peuvent être indifféremment polluées par des cations de métaux alcalins, de métaux alcalino-terreux, de métaux de transition ou de lanthanides tels que les cations Na$^+$ et Ca$^{2+}$. De même, on peut envisager la mise en oeuvre du procédé de l'invention pour la purification de solutions de sels de lithium comprenant plus d'un cation métallique contaminant.

La nature des sels de lithium n'est pas non plus déterminante. Selon un mode de réalisation préféré, la solution de sels de lithium à purifier est une solution aqueuse de chlorure de lithium. Plus généralement, les sels de lithium peuvent être des sulfates, nitrates ou halogénures.

Le procédé de l'invention peut être utilisé quelle que soit la concentration en cations métalliques de la solution à purifier. Toutefois, de façon à limiter les dimensions des installations de purification, il est préférable que lesdites impuretés métalliques soient inférieures, en quantité, à une valeur maximum. Plus précisément, lorsque ladite solution à purifier comprend i cations métalliques distincts, on préfère que les concentrations molaires $c_i$ respectives en chacun desdits cations métalliques vérifient l'équation :

$$\sum_i \frac{n_i \cdot c_i}{c_{Li}} \leq 0,9$$

dans laquelle $n_i$ représente l'état d'oxydation du cation métallique i et $c_{Li}$ représente la concentration molaire en cations $Li^+$ de la solution à purifier.

Ainsi, un mode de réalisation particulièrement préféré de l'invention consiste à purifier une solution de chlorure de lithium comprenant, à titre d'impureté, du chlorure de sodium, dans laquelle le rapport molaire des cations $Na^+$ aux cations $Li^+$ est d'au plus 9.

Le matériau approprié à l'échange des cations $Li^+$ par les cations métalliques contaminant la solution à purifier, se trouve initialement c'est-à-dire en début de traitement, principalement chargé en ions $Li^+$. En cours de traitement et plus précisément à l'étape (i) décrite ci-dessus, ledit matériau capte les cations métalliques de la solution à purifier et relargue dans la solution résiduaire, récupérée en sortie de la zone d'échange, des cations lithium. Dans la mesure où ledit matériau est choisi de telle sorte que son affinité pour les ions métalliques à éliminer est supérieure à son affinité pour le lithium, les processus d'échange mis en jeu à l'étape (i) sont thermodynamiquementfavorisés. Ainsi, pour peu que le matériau utilisé soit suffisamment chargé en cations lithium, la solution résiduaire récupérée en sortie se trouve débarassée de la totalité des cations métalliques contaminants. De façon empirique, on a constaté que tel était effectivement le cas lorsque ledit matériau est chargé à plus de 95 % en lithium, ce qui signifie de façon générale que 95 % des cations métalliques échangeables associés audit matériau sont des cations lithium. Comme matériau approprié pour l'échange de cations $Li^+$ par des cations métalliques, on a recours à des zéolites.

Les zéolites utilisables selon l'invention appartiennent au groupe des alumino-silicates métalliques hydratés, naturels ou synthétiques. Celles-ci diffèrent les unes des autres de par leur composition chimique, leur structure cristalline et leurs propriétés physiques, telles que leur diagramme de diffraction aux rayons X.

De façon schématique, les cristaux de zéolite sont constitués de réseaux tétrahédriques de $SiO_4$ et de $AlO_4$ imbriqués, chaque atome d'oxygène faisant partie d'un réseau de $SiO_4$ et d'un réseau de $AlO_4$ de telle sorte que le rapport des atomes d'oxygène aux atomes de silicium et d'aluminium est de 2. Un certain nombre de cations, par exemple des cations de métaux alcalins ou alcalino-terreux tels que le sodium, le potassium, le calcium et le magnésium, inclus dans le réseau cristallin, assurent la neutralité électrique de la zéolite.

Selon l'invention, les zéolites peuvent être sous la forme de poudres cristallines ou d'agglomérats. Les agglomérats de zéolites sont obtenus de façon conventionnelle par mise en oeuvre de procédés classiques d'agglomération.

La zéolite agglomérée peut par exemple être préparée par mélange d'une poudre cristalline de zéolite avec de l'eau et un liant (généralement sous forme de poudre), puis pulvérisation de ce mélange sur des agglomérats de zéolites jouant le rôle de germe d'agglomération. Pendant la pulvérisation les agglomérats de zéolite sont soumis à une rotation continue sur eux-mêmes. Ceci peut être réalisé en disposant les agglomérats dans un réacteur en rotation sur lui-même autour d'un axe de rotation, ledit axe de rotation étant préférablement incliné par rapport à la direction verticale. Par ce procédé, couramment désigné dans la technique par procédé "boule de neige" on obtient des agglomérats sous forme de billes.

Les agglomérats ainsi obtenus sont ensuite soumis à une cuisson à une température comprise entre environ 500 et 700° C, de préférence une température voisine de 600° C.

Comme exemple de liant, l'homme du métier pourra recourir à une argile telle que du kaolin, de la silice ou de l'alumine.

La zéolite agglomérée ainsi obtenue, laquelle comprend un liant, peut servir à la préparation de zéolite agglomérée sans liant également utilisable dans le procédé de l'invention. De façon à convertir le liant en phase zéolitique, on peut procéder en effet à la cuisson ultérieure des agglomérats zéolitiques avec liant, ce par quoi, après cristallisation, on obtient des agglomérats zéolitiques sans liant.

Selon un mode de réalisation préféré de l'invention, la zéolite doit être stable, sous sa forme acide, à une température comprise entre 150 et 350° C, tout en présentant un rapport Si/Al inférieur à 5.

Dans ce cas, la régénération de la zéolite à l'issue de l'étape (i) est facilitée.

Dans le cadre de l'invention on entend par zéolite sous forme acide, une zéolite dont tout ou partie des cations métalliques a été substitué par des cations $H^+$.

Parmi ces zéolites, celles présentant une meilleure affinité pour le cation ammonium, $NH_4^+$, que pour les cations métalliques contaminants, sont plus particulièrement préférées.

Par ailleurs, de façon avantageuse, la zéolite utilisée présente une capacité d'échange supérieure à 1,5 eq/kg, mieux encore supérieure à 5 eq/kg, un rapport Si/Al compris entre 1 et 2, et un diamètre des pores supérieur à 4 Å. L'expression "capacité d'échange supérieure à 1,5 eq/kg" signifie qu'un kilogramme de zéolite peut capter jusqu'à 1,5 équivalents d'ions métalliques, c'est-à-dire Z moles de cations métalliques, où Z est donné par l'équation :

$$Z = \frac{1,5}{n_i}$$

$n_i$ représentant l'état d'oxydation du métal.

Pour la préparation de telles zéolites, l'homme du métier peut recourir à l'un quelconque des procédés d'échange connus dans la technique. A titre d'illustration, le protocole opératoire suivant, pour la préparation de faujasite au lithium, est donné :

au travers d'une colonne garnie de faujasite, maintenue à une température comprise entre 70 et 95° C, on fait percoler une solution aqueuse de sels de lithium, telle qu'une solution aqueuse de chlorure de lithium, dont on ajuste le pH entre 8 et 10 par addition de lithine. Cette opération est poursuivie pendant un temps suffisant de façon à échanger au moins 90 % des cations de la zéolite. On estime généralement que pour introduire une quantité donnée d'ions lithium dans la zéolite, il est nécessaire d'éluer la colonne avec 4 à 12 fois cette quantité d'ions lithium. On détermine ainsi facilement le volume de la solution de sels de lithium devant être déversée en tête de colonne, compte tenu de sa normalité. De préférence, on utilisera une solution aqueuse de chlorure de lithium dont la normalité est comprise entre 0,5 et 1,5 N, mieux encore une solution aqueuse environ 1N de chlorure de lithium. De façon avantageuse, on maintiendra à 95° C la température de la zéolite ainsi que celle de la solution de chlorure de lithium pendant toute la durée de l'échange d'ions.

Selon une variante préférée de l'invention, le matériau approprié pour l'échange des cations $Li^+$ par les cations métalliques contaminants, est une zéolite choisie parmi l'érionite, la chabazite, l'offrétite, la clinoptilolite et la mordénite, lesdites zéolites étant échangées à au moins 95 % au lithium.

Les conditions préférées de mise en oeuvre de l'étape (i) du procédé de l'invention sont la pression atmosphérique et une température comprise entre 5 et 30° C, de préférence entre 5 et 15° C.

Le procédé de régénération du matériau approprié pour l'échange ($Li^+$ ↔ cations métalliques) mis en oeuvre à l'étape (ii) dépend de la nature dudit matériau.

De façon générale, on remarque qu'en contrôlant judicieusement la température on peut faciliter les processus d'échange. Plus précisément, lorsque l'échange est favorable, c'est-à-dire que la zéolite présente une meilleure affinité pour les cations en solution que pour les cations qu'elle comprend au sein de son réseau macroporeux, il est préférable d'opérer à basse température. Alors que, lorsque l'échange est défavorable, il est souhaitable d'élever la température. De fait, toute élévation de !a température tend à uniformiser la répartition des espèces d'ions entre la phase zéolitique et la phase liquide.

Lorsque le matériau approprié pour l'échange des cations $Li^+$ par les cations métalliques contaminants est une zéolite, les étapes impliquées dans le procédé de régénération sont :

a) une première étape de traitement de la zéolite par une solution à teneur en cations $NH_4^+$, ce par quoi la totalité des cations métalliques fixés sur la zéolite sont déplacés par des cations $NH_4^+$;

b) une seconde étape de chauffage de la zéolite, issue de l'étape précédente, à une température comprise entre 150 et 350° C, ce par quoi la zéolite est convertie en sa forme acide par dégagement d'ammoniac; et

c) une dernière étape de traitement de la zéolite sous forme acide, résultant de l'étape b) ci-dessus, par une solution aqueuse de lithine, ce par quoi ladite zéolite est régénérée.

A l'étape a) ci-dessus, il est préférable d'opérer à une température comprise entre 5 et 95° C, de préférence entre 5 et 60° C, mieux encore entre 20 et 40° C.

La solution à teneur en cations $NH_4^+$, laquelle est avantageusement une solution aqueuse, présente de préférence une normalité comprise entre 0,1 et 10 N, mieux encore, entre 0,1 et 5 N.

Cette solution est par exemple une solution aqueuse de sulfate d'ammonium ou de chlorure d'ammonium.

Selon un mode de réalisation préféré de l'invention, la désammoniation mise en oeuvre à l'étape b) est réalisée par chauffage de la zéolite à une température comprise entre 150 et 350° C, tout en maintenant la zéolite sous un courant de gaz inerte tel que l'air, l'argon ou l'azote.

On note que, selon l'invention, on entend par gaz inerte, un gaz qui ne réagit ni avec l'ammoniac ni avec la zéolite, qu'elle soit sous sa forme acide ou chargée de cations $NH_4^+$.

Avantageusement, l'ammoniac gazeux relargué par la zéolite à l'étape b) est recyclé à l'étape a) après barbottage dans une solution acide appropriée. Par exemple, lorsqu'à l'étape a), la solution à teneur en cations $NH_4^+$ est une solution aqueuse de sulfate d'ammonium, on envisagera à l'étape b) le recyclage de l'ammoniac formé, par barbottage de celui-ci dans une solution aqueuse d'acide sulfurique.

Dans la mesure où la zéolite utilisée comme matériau approprié pour les échanges ($Li^+$ ↔ cations métalliques) présente une meilleure affinité pour les cations $NH_4^+$ que pour les cations métalliques contaminants, la quantité d'ions $NH_4^+$ devant être percolée à l'étape a) au travers de la zéolite à régénérer est proche de la quantité d'ions métalliques à déplacer. Ainsi, on réalisera l'échange de la totalité des cations métalliques fixés sur ladite zéolite par élution d'une solution contenant de 1 à 1,5 fois la stoechiométrie en ions $NH_4^+$.

Concernant l'étape c) de traitement par la lithine, on optera de préférence pour une solution aqueuse de lithine présentant un pH compris entre 8 et 11, de préférence entre 8 et 10, en maintenant la température à une valeur comprise entre 5 et 95° C, de préférence entre 5 et 40° C, étant entendu qu'une pression proche de la pression atmosphérique convient parfaitement.

Le procédé de l'invention est spécialement adapté pour le recyclage des solutions résiduelles provenant d'unités de production de zéolites au lithium.

Ainsi, l'invention concerne également un procédé de production d'une zéolite échangée au lithium à partir d'une zéolite de départ contenant un ou plusieurs cations métalliques autres que le lithium, comprenant les étapes consistant à :

($\alpha$) faire passer dans une première zone d'échange garnie de ladite zéolite de départ et maintenue à une température comprise entre 50 et 150° C, une solution de sels de lithium pendant le temps nécessaire à l'échange des cations métalliques de ladite zéolite de départ par des cations Li$^+$, et récupérer, en sortie de ladite première zone d'échange, la solution résiduelle à base de sels de lithium et contenant les cations métalliques déplacés, provenant de ladite zéolite de départ; et

($\beta$) purifier la solution résiduelle récupérée en sortie de ladite première zone d'échange par mise en oeuvre du procédé de purification de l'invention comprenant les étapes consistant à :

- faire passer la solution à purifier dans une seconde zone d'échange garnie d'un matériau approprié pour l'échange de cations Li$^+$ par lesdits cations métalliques, ledit matériau étant initialement chargé à plus de 95 % en cations Li$^+$ et présentant une meilleure affinité pour lesdits cations métalliques que pour les cations Li$^+$ de façon à fixer la totalité des cations métalliques contaminants sur ledit matériau par déplacement des cations Li$^+$, ce par quoi la solution de sels de lithium récupérée en sortie de ladite seconde zone d'échange est débarassée desdits cations métalliques contaminants;
- régénérer ledit matériau par substitution des cations métalliques fixés sur ledit matériau par des cations Li$^+$.

En tant que solution de sels de lithium, on préfère utiliser à l'étape ($\alpha$) une solution aqueuse de chlorure de lithium.

Selon un mode de réalisation préféré, ladite première zone d'échange est maintenue pendant toute la mise en oeuvre de l'étape ($\alpha$) à une température comprise entre 70 et 95° C et à pression atmosphérique.

Selon l'invention, on peut envisager par ce procédé la préparation de tout type de zéolite échangée au lithium. Le procédé de l'invention est particulièrement approprié à la production de faujasites au lithium.

On remarquera que les solutions résiduelles provenant des unités de fabrication de zéolites au lithium sont souvent des solutions aqueuses basiques ; de fait, en cours de fabrication, le pH des solutions d'élution est ajusté entre 8 et 10 par addition de faibles quantités de lithine.

On a pu constater que la présence de lithine et la basicité des solutions à purifier ne nuisent en rien à l'efficacité du procédé de purification de l'invention.

Selon l'invention, la nature de la zone d'échange n'est pas déterminante. Celle-ci peut être une colonne ou un réacteur tel qu'une cuve. De façon à limiter la consommation en réactifs et à faciliter la manipulation, l'on optera pour une zone d'échange en forme de colonne que l'on garnira de zéolite agglomérée. Néanmoins, dans le cas de la réaction de la lithine sur la zéolite sous forme acide, on utilisera de préférence un procédé en cuve, la réaction étant stoechiométrique.

Le procédé de l'invention paut avantageusement être utilisé dans un procédé PSA/VSA-O$_2$ et plus précisément dans un procédé pour la séparation d'un mélange d'oxygène et d'azote en chacun de ses constituants, comprenant la mise en contact du mélange à séparer avec un adsorbant sélectif de l'azote, dès lors que celui-ci implique l'utilisation d'une zéolite échangée au lithium.

L'invention va être décrite maintenant en référence à l'exemple suivant donné uniquement à titre indicatif.

**Exemple**

Cet exemple illustre la purification des solutions résiduelles provenant d'une unité de fabrication de faujasite au lithium.

*A - Préparation d'une faujasite échangée à 95 % au lithium.*

La faujasite utilisée comme matériau de départ est disponible auprès de la Société UOP sous la référence 13X-APG. C'est une zéolite agglomérée, sous forme de granulés, contenant environ 20 % de liant, présentant un rapport Si/Al de 1,25, une capacité d'échange de 5,1 eq/kg. Cette zéolite contient exclusivement des cations Na$^+$.

Après avoir disposé 1 kg de cette faujasite dans une colonne maintenue à 95° C, on fait percoler au travers de la colonne 12,2 l d'une solution aqueuse 2N de chlorure de lithium dont on a préalablement ajusté le pH à 8 par addition d'une faible quantité de lithine. La solution résiduelle récupérée en sortie de la colonne garnie de zéolite comprend 20 % en mole de chlorure de sodium et 80 % en mole de chlorure de lithium.

*B - Purification de la solution résiduelle récupérée à l'étape A.*

Le matériau utilisé pour la purification de la solution résiduelle récupérée à l'étape A est une poudre de chabazite présentant une capacité d'échange de 2 eq/kg.

Cette poudre est simplement obtenue par mise en oeuvre des étapes de :

(i) mélange de 60,6 g d'hydroxyde d'aluminium, 54,56 g d'hydroxyde de sodium, 35,0 g d'hydroxyde de potassium, 4,48 g d'hydroxyde de tétrabutyl-ammonium, 420,8 g de silice (Ludox HS 30) et 269 g d'eau; et

(ii) chauffage à 95° C pendant un jour dans un réacteur scellé de polypropylène.

Dans un premier temps, on convertit 2,45 kg de cette chabazite en chabazite échangée à 100 % au lithium. Pour ce faire, on utilise le protocole opératoire suivant : au travers d'une colonne garnie de 2,45 kg de la chabazite commerciale maintenue à 95° C, on fait percoler une solution aqueuse 2N de chlorure de lithium, jusqu'à ce qu'aucune trace de sodium ne soit détectée en sortie de colonne. Pour améliorer la cinétique d'échange, on ajuste au préalable le pH de la solution d'élution de chlorure de lithium à 8 par addition d'une faible quantité de lithine.

Après rinçage de la chabazite ainsi obtenue, laquelle est échangée à 100 % au lithium, avec de l'eau, on fait passer la solution résiduelle récupérée à l'étape A, au travers de la colonne de chabazite au lithium.

La solution récupérée en sortie de colonne est une solution de chlorure de lithium ne contenant aucune trace de chlorure de sodium.

*C - Régénération de la chabazite utilisée à l'étape B.*

De façon à régénérer la chabazite sous sa forme Li$^+$, on réalise la séquence d'opérations suivantes :

1 - On fait percoler au travers de la colonne garnie des 2,45 kg de chabazite, maintenue à température ambiante, 4,9 l d'une solution 1N de sulfate d'ammonium. De cette façon, tous les cations Na$^+$ de la chabazite sont déplacés par des cations NH$_4^+$.

2 - On porte la chabazite à 200° C en faisant passer en continu un courant d'azote au travers de la colonne de façon à entraîner l'ammoniac qui se dégage de la chabazite. La colonne est maintenue à cette température tant que de l'ammoniac est détecté en sortie de colonne.

3 - La colonne est ensuite vidée de son contenu et la chabazite introduite dans une cuve réactionnelle maintenue à température ambiante. Dans cette cuve sont introduits sous agitation 48,5 l d'une solution 0,1 N de lithine. A l'issue de cette étape, la chabazite se retrouve intégralement sous la forme Li$^+$.

**Revendications**

1. Procédé de purification d'une solution de sels de lithium contaminée par des cations métalliques comprenant les étapes consistant à :

(i) faire passer la solution à purifier dans une zone d'échange garnie d'un matériau approprié pour l'échange de cations Li$^+$ par lesdits cations métalliques, ledit matériau étant une zéolite initialement chargée à plus de 95 % en cations Li$^+$ et présentant une meilleure affinité pour lesdits cations métalliques que pour les cations Li$^+$, de façon à fixer la totalité des cations métalliques contaminants sur ledit matériau par déplacement de cations Li$^+$, ce par quoi la solution de sels de lithium récupérée en sortie de ladite zone d'échange est débarassée desdits cations métalliques contaminants;

(ii) régénérer ledit matériau par substitution des cations métalliques fixés sur ledit matériau par des cations Li$^+$.

2. Procédé selon la revendication 1, caractérisé en ce que lesdits cations métalliques contaminants sont des cations mono-, di- ou trivalents ou un mélange de ceux-ci, tels que des cations de métaux alcalins, de métaux alcalino-terreux, de métaux de transition ou de lanthanides.

3. Procédé selon la revendication 1, caractérisé en ce que lesdits cations métalliques sont choisis parmi Na$^+$ et Ca$^{2+}$ et leur mélange.

4. Procédé selon l'une quelconque des revendications précédentes, caractérisé en ce que la solution de sels de lithium à purifier est une solution aqueuse de chlorure de lithium.

5. Procédé selon l'une des revendications précédentes, caractérisé en ce que ladite solution de sels de lithium à purifier comprend i cations métalliques contaminants dans des proportions telles que les concentrations molaires $c_i$ respectives en lesdits cations contaminants satisfont l'équation :

$$\sum_i \frac{n_i \cdot c_i}{c_{Li}} \leq 0,9$$

dans laquelle $n_i$ représente l'état d'oxydation du cation métallique i et $c_{Li}$ représente la concentration molaire en cations Li$^+$ de ladite solution à purifier.

6. Procédé selon l'une des revendications précédentes, caractérisé en ce que la solution de sels de lithium à purifier est une solution de chlorure de lithium comprenant à titre d'impuretés du chlorure de sodium dans laquelle le rapport molaire des cations Na$^+$ aux cations Li$^+$ est d'au plus 9.

7. Procédé selon l'une des revendications 1 à 6, caractérisé en ce que le matériau approprié pour l'échange des cations Li$^+$ par lesdits cations métalliques est une zéolite dont la forme acide est stable à une température comprise entre 150 et 350° C, et qui présente un rapport Si/Al inférieur à 5.

8. Procédé selon la revendication 7, caractérisé en ce que la zéolite présente une meilleure affinité pour le cation ammonium, NH$_4^+$, que pour les cations métalliques contaminants.

9. Procédé selon l'une des revendications 7 et 8, caractérisé en ce que ladite zéolite est choisie parmi une mordénite, une chabazite, une clinoptilolite, une offrétite et une érionite, ladite zéolite étant échangée à plus de 95 % au lithium.

10. Procédé selon l'une des revendications 7 à 9, caractérisé en ce qu'à l'étape (i) la température est maintenue entre 5 et 30° C, de préférence entre 5 et 15°C.

11. Procédé selon l'une des revendications 7 à 10, caractérisé en ce que la zéolite présente une capacité d'échange d'ions supérieure à 1,5 eq/kg, mieux encore, supérieure à 5 eq/kg, un rapport Si/Al compris entre 1 et 2 et un diamètre des pores supérieur à 4 Å.

12. Procédé selon l'une des revendications 7 à 11, caractérisé en ce que l'étape (ii) de régénération du matériau approprié pour l'échange des cations Li$^+$ par des cations métalliques comprend :

   a) le traitement de la zéolite par une solution à teneur en cations NH$_4^+$, ce par quoi la totalité des cations métalliques fixés sur ladite zéolite sont déplacés par des cations NH$_4^+$, et
   b) le chauffage de la zéolite issue de l'étape a) précédente à une température comprise entre 150 et 350° C, ce par quoi ladite zéolite est convertie en sa forme acide par dégagement d'ammoniac; et
   c) le traitement de la zéolite sous forme acide, résultant de l'étape b) ci-dessus par une solution aqueuse de lithine, ce par quoi ladite zéolite est ainsi régénérée.

13. Procédé selon la revendication 12, caractérisé en ce qu'à l'étape a) l'on utilise une solution aqueuse de sulfate ou de chlorure d'ammonium de normalité comprise entre 0,1 et 10N, de préférence entre 0,1 et 5N, la température étant maintenue entre 5 et 95° C, de préférence entre 20 et 40° C.

14. Procédé selon l'une des revendications 12 ou 13, caractérisé en ce que lors du traitement par la solution aqueuse de lithine, on utilise une solution aqueuse de lithine de pH compris entre 8 et 11, de préférence entre 8 et 10, la température étant maintenue entre 5 et 95° C, de préférence entre 5 et 40° C.

15. Procédé de production d'une zéolite échangée au lithium à partir d'une zéolite de départ contenant un ou plusieurs cations métalliques autres que le lithium, comprenant les étapes consistant à :

   (α) faire passer dans une zone d'échange garnie de ladite zéolite de départ et maintenue à une température comprise entre 50 et 150° C, une solution de sels de lithium pendant le temps nécessaire à l'échange des cations métalliques de ladite zéolite de départ par des cations Li$^+$, et récupérer en sortie de ladite zone d'échange la solution résiduelle à base de sels de lithium et contenant les cations métalliques déplacés provenant de ladite zéolite naturelle ou synthétique; et
   (β) la purification de la solution résiduelle récupérée en sortie de ladite zone d'échange par mise en oeuvre d'un procédé selon l'une des revendications 1 à 14, en vue de son recyclage à l'étape (α) en tant que solution de sels de lithium.

16. Procédé selon la revendication 15, caractérisé en ce que la solution de sels de lithium est une solution aqueuse de chlorure de lithium.

17. Procédé pour la séparation d'un mélange d'oxygène et d'azote en chacun de ses constituants comprenant la mise en contact du mélange à séparer avec une zéolite échangée au lithium comprenant la mise en oeuvre du procédé de l'une quelconque des revendications 1 à 16.

**Patentansprüche**

1. Verfahren zur Reinigung einer durch Metallkationen verunreinigten Lithiumsalzlösung, bei dem man:

   (i) die zu reinigende Lösung durch eine Austauschzone mit einem zum Austausch von Li$^+$-Kationen gegen die Metallkationen geeigneten Material, bei dem es sich um einen Zeolith mit einer Anfangsbeladung von mehr als 95% Li$^+$-Kationen handelt und das eine höhere Affinität für die Metallkationen als für die Li$^+$-Kationen aufweist, so hindurchleitet, daß die gesamten verunreinigenden Metallkationen durch Verdrängung von Li$^+$-Kationen auf dem Material fixiert werden, wodurch die am Ausgang der Austauschzone zurückgewonnene Lithiumsalzlösung frei von den verunreinigenden Metallkationen ist; und

(ii) das Material durch Ersatz der darauf fixierten Metallkationen durch Li$^+$-Kationen regeneriert.

2. Verfahren nach Anspruch 1, dadurch gekennzeichnet, daß es sich bei den verunreinigenden Metallkationen um ein-, zwei- und/oder dreiwertige Kationen wie Alkalimetall-, Erdalkalimetall-, Übergangsmetall- oder Lanthanidkationen handelt.

3. Verfahren nach Anspruch 1, dadurch gekennzeichnet, daß man die Metallkationen unter Na$^+$ und Ca$^{2+}$ und deren Gemischen auswählt.

4. Verfahren nach einem der vorhergehenden Ansprüche, dadurch gekennzeichnet, daß es sich bei der zu reinigenden Lithiumsalzlösung um eine wäßrige Lithiumchloridlösung handelt.

5. Verfahren nach einem der vorhergehenden Ansprüche, dadurch gekennzeichnet, daß die zu reinigende Lithiumsalzlösung i verunreinigende Metallkationen in solchen Anteilen enthält, daß die jeweiligen molaren Konzentrationen $c_i$ an verunreinigenden Kationen die folgende Gleichung erfüllen:

$$\sum_i \frac{n_i \cdot c_i}{c_{Li}} \leq 0,9$$

worin $n_i$ für die Oxidationsstufe des Metallkations i und $c_{Li}$ für die molare Konzentration an Li$^+$-Kationen in der zu reinigenden Lösung steht.

6. Verfahren nach einem der vorhergehenden Ansprüche, dadurch gekennzeichnet, daß es sich bei der zu reinigenden Lithiumsalzlösung um eine Lithiumchloridlösung handelt, die als Verunreinigung Natriumchlorid enthält und bei der das Molverhältnis von Na$^+$-Kationen zu Li$^+$-Kationen höchstens 9 beträgt.

7. Verfahren nach einem der Ansprüche 1 bis 6, dadurch gekennzeichnet, daß es sich bei dem zum Austausch von Li$^+$-Kationen gegen die Metallkationen geeigneten Material um einen Zeolith handelt, dessen saure Form bei einer Temperatur zwischen 150 und 350°C stabil ist und der ein Si/Al-Verhältnis von weniger als 5 aufweist.

8. Verfahren nach Anspruch 7, dadurch gekennzeichnet, daß der Zeolith eine höhere Affinität für das Ammoniumkation NH$_4^+$ als für die verunreinigenden Metallkationen aufweist.

9. Verfahren nach einem der Ansprüche 7 und 8, dadurch gekennzeichnet, daß man den Zeolith unter einem Mordenit, einem Chabasit, einem Clinoptilolith, einem Offretit und einem Erionit auswählt, wobei der Zeolith zu mehr als 95% mit Lithium ausgetauscht ist.

10. Verfahren nach einem der Ansprüche 7 bis 9, dadurch gekennzeichnet, daß man in Schritt (i) die Temperatur zwischen 5 und 30°C, vorzugsweise zwischen 5 und 15°C, hält.

11. Verfahren nach einem der Ansprüche 7 bis 10, dadurch gekennzeichnet, daß der Zeolith eine Ionenaustauschkapazität von mehr als 1,5 eq/kg, noch besser von mehr als 5 eq/kg, ein Si/Al-Verhältnis zwischen 1 und 2 und einen Porendurchmesser von mehr als 4 Å aufweist.

12. Verfahren nach einem der Ansprüche 7 bis 11, dadurch gekennzeichnet, daß man den Schritt (ii) der Regeneration des zum Austausch von Li$^+$-Kationen gegen Metallkationen geeigneten Materials so durchführt, daß man:

a) den Zeolith mit einer NH$_4^+$-Kationen enthaltenden Lösung behandelt, wodurch die gesamten, auf dem Zeolith fixierten Metallkationen durch NH$_4^+$-Kationen verdrängt werden,
b) den Zeolith aus dem vorhergehenden Schritt a) auf eine Temperatur zwischen 150 und 350°C erhitzt, wodurch der Zeolith unter Abgabe von Ammoniak in seine saure Form umgewandelt wird, und
c) den aus obigem Schritt b) erhaltenen Zeolith in saurer Form mit einer wäßrigen Lithiumhydroxidlösung behandelt, wodurch der Zeolith regeneriert wird.

13. Verfahren nach Anspruch 12, dadurch gekennzeichnet, daß man in Schritt a) eine wäßrige Ammoniumsulfat- oder Ammoniumchloridlösung mit einer Normalität zwischen 0,1 und 10N, vorzugsweise zwischen 0,1 und 5N, verwendet, wobei man die Temperatur zwischen 5 und 95°C, vorzugsweise zwischen 20 und 40°C, hält.

14. Verfahren nach einem der Ansprüche 12 oder 13, dadurch gekennzeichnet, daß man bei der Behandlung mit der wäßrigen Lithiumhydroxidlösung eine wäßrige Lithiumhydroxidlösung mit einem pH-Wert zwischen 8 und 11, vorzugsweise zwischen 8 und 10 verwendet, wobei man die Temperatur zwischen 5 und 95°C, vorzugsweise zwischen 5 und 40°C, hält.

15. Verfahren zur Herstellung eines lithiumausgetauschten Zeoliths aus einem Ausgangszeolith, der ein oder mehrere von Lithium verschiedene Metallkationen enthält, bei dem man:

(α) durch eine bei einer Temperatur zwischen 50 und 150°C gehaltene, mit dem Ausgangszeolith beschickte Austauschzone eine Lithiumsalzlösung über den zum Austausch der Metallkationen des Ausgangszeoliths gegen Li⁺-Kationen erforderlichen Zeitraum hindurchleitet und am Ausgang der Austauschzone die auf Lithiumsalzen basierende und verdrängte Metallkationen aus dem natürlichen oder synthetischen Zeolith enthaltende Restlösung zurückgewinnt, und

(β) die am Ausgang der Austauschzone zurückgewonnene Restlösung zwecks Rückführung zum Schritt (α) als Lithiumsalzlösung durch Anwendung eines Verfahrens nach einem der Ansprüche 1 bis 14 reinigt.

16. Verfahren nach Anspruch 15, dadurch gekennzeichnet, daß es sich bei der Lithiumsalzlösung um eine wäßrige Lithiumchloridlösung handelt.

17. Verfahren zur Trennung eines Gemischs aus Sauerstoff und Stickstoff in seine Bestandteile, bei dem das zu trennende Gemisch mit einem lithiumausgetauschten Zeolith in Berührung gebracht wird, wobei man das Verfahren nach einem der Ansprüche 1 bis 16 anwendet.

**Claims**

1. Process for the purification of a solution of lithium salts which is contaminated by metal cations, comprising the stages consisting in:

   (i) passing the solution to be purified into an exchange region packed with an appropriate material for the exchange of Li⁺ cations by the said metal cations, the said material being a zeolite initially charged with more than 95% of Li⁺ cations and exhibiting a better affinity for the said metal cations than for the Li⁺ cations, so as to fix all the contaminating metal cations on the said material by displacement of Li⁺ cations, whereby the solution of lithium salts which is recovered at the outlet of the said exchange region is freed from the said contaminating metal cations;

   (ii) regenerating the said material by substitution of the metal cations fixed to the said material by Li⁺ cations.

2. Process according to Claim 1, characterized in that the said contaminating metal cations are mono-, di- or trivalent cations or a mixture of these, such as cations of alkali metals, of alkaline earth metals, of transition metals or of lanthanides.

3. Process according to Claim 1, characterized in that the said metal cations are chosen from Na⁺ and Ca²⁺ and their mixture.

4. Process according to any one of the preceding claims, characterized in that the solution of lithium salts to be purified is an aqueous lithium chloride solution.

5. Process according to one of the preceding claims, characterized in that the said solution of lithium salts to be purified comprises contaminating metal cations i in proportions such that the respective molar concentrations $c_i$ of the said contaminating cations satisfy the equation:

$$\sum_i \frac{n_i \times c_i}{c_{Li}} \leq 0.9$$

in which $n_i$ represents the oxidation state of the metal cation i and $c_{Li}$ represents the molar concentration of Li⁺ cations in the said solution to be purified.

6. Process according to one of the preceding claims, characterized in that the solution of lithium salts to be purified is a lithium chloride solution comprising sodium chloride as impurities, in which solution the molar ratio of the Na⁺ cations to the Li⁺ cations is at most 9.

7. Process according to one of Claims 1 to 6, characterized in that the appropriate material for the exchange of the Li⁺ cations by the said metal cations is a zeolite, the acid form of which is stable at a temperature of between 150 and 350°C and which exhibits an Si/Al ratio of less than 5.

8. Process according to Claim 7, characterized in that the zeolite exhibits a better affinity for the ammonium cation NH₄⁺ than for the contaminating metal cations.

9. Process according to either of Claims 7 and 8, characterized in that the said zeolite is chosen from a mordenite, a chabazite, a clinoptilolite, an offretite and an erionite, the said zeolite being exchanged to more than 95% with lithium.

10. Process according to one of Claims 7 to 9, characterized in that, in stage (i), the temperature is maintained between 5 and 30°C, preferably between 5 and 15°C.

11. Process according to one of Claims 7 to 10, characterized in that the zeolite exhibits an ion exchange capacity of greater than 1.5 eq/kg, better still of greater than 5 eq/kg, an Si/Al ratio of between 1 and 2 and a diameter of the pores of greater than 4 Å.

**12.** Process according to one of Claims 7 to 11, characterized in that the stage (ii) of regeneration of the material appropriate for the exchange of the Li$^+$ cations by metal cations comprises:

a) the treatment of the zeolite with a solution comprising a content of NH$_4{}^+$ cations, whereby all the metal cations fixed to the said zeolite are displaced by NH$_4{}^+$ cations, and
b) the heating of the zeolite resulting from the preceding stage a) at a temperature of between 150 and 350°C, whereby the said zeolite is converted to its acid form by release of ammonia; and
c) the treatment of the zeolite in acid form, resulting from the above stage b), with an aqueous lithium hydroxide solution, whereby the said zeolite is thus regenerated.

**13.** Process according to Claim 12, characterized in that, in stage a), use is made of an aqueous ammonium sulphate or chloride solution with a normality of between 0.1 and 10N, preferably between 0.1 and 5N, the temperature being maintained between 5 and 95°C, preferably between 20 and 40°C.

**14.** Process according to either of Claims 12 and 13, characterized in that, during the treatment with the aqueous lithium hydroxide solution, use is made of an aqueous lithium hydroxide solution with a pH of between 8 and 11, preferably between 8 and 10, the temperature being maintained between 5 and 95°C, preferably between 5 and 40°C.

**15.** Process for the production of a lithium-exchanged zeolite from a starting zeolite comprising one or more metal cations other than lithium, comprising the stages consisting in:

(α) passing a solution of lithium salts into an exchange region, which region is packed with the said starting zeolite and is maintained at a temperature of between 50 and 150°C, for the time necessary for the exchange of the metal cations of the said starting zeolite by Li$^+$ cations, and recovering, at the outlet of the said exchange region, the residual solution based on lithium salts comprising the displaced metal cations originating from the said natural or synthetic zeolite; and
(β) the purification of the residual solution recovered at the outlet of the said exchange region by employing a process according to one of Claims 1 to 14, for the purpose of recycling it in the stage (α) as solution of lithium salts.

**16.** Process according to Claim 15, characterized in that the solution of lithium salts is an aqueous lithium chloride solution.

**17.** Process for the separation of a mixture of oxygen and nitrogen into each of its constituents comprising bringing the mixture to be separated into contact with a lithium-exchanged zeolite comprising the use of the process of any one of Claims 1 to 16.